# EUROPÄISCHE PATENTANMELDUNG

(11) **EP 0 577 126 A1**
(43) Veröffentlichungstag der Anmeldung: **05.01.1994**
(21) Anmeldenummer: 93110530.8
(22) Anmeldetag: 01.07.1993
(51) Int. Cl.: G11B 27/30

(54) **Verfahren und Schaltungsanordnung zur Markierung von Sprachaufzeichnungen**

(30) Priorität: 02.07.1992 DE 4221731
(71) Anmelder: GRUNDIG E.M.V. Elektro-Mechanische Versuchsanstalt Max Grundig GmbH & Co. KG, D-90762 Fürth (DE)
(72) Erfinder: Mittelstädt, Rainer, D-90748 Fürth (DE)

(57) **Zusammenfassung**

Aufnahme-/Wiedergabegeräte, insbesondere Diktiergeräte, welche die Möglichkeit bieten Teile einer Aufnahme zu markieren sind bekannt. Soll ein Teil einer Aufnahme markiert werden, wird zu Beginn und am Ende dieses Teils eine Marke gesetzt. Weiterhin ist es bekannt, nach der Aufnahme ein Markierungssignal auf derselben Tonspur aufzuzeichnen, wodurch das Nutzsignal abgeschwächt wird.

Das neue Markierverfahren ermöglicht durch eine frühzeitige additive Überlagerung von Sprach- und Markierungssignal oder durch eine Verfremdung mittels frequenzselektiver Dämpfung des Sprachsignals eine wesentliche Reduzierung des schaltungstechnischen Aufwands. Durch eine Regelung des Verstärkungsfaktors bei der Aufzeichnung wird außerdem eine optimale Verständlichkeit bei der Wiedergabe des markierten Nutzsignals erreicht.

Das neue Markierverfahren kann in allen Aufnahme-/Wiedergabegeräten eingesetzt werden, um eine Hervorhebung bzw. Markierung ganzer Aufzeichnungen oder Teile davon zu ermöglichen.

## Beschreibung

Die Erfindung betrifft ein Verfahren zur Markierung von Sprachaufzeichnungen, gemäß dem Oberbegriff des Patentanspruchs 1 und eine Schaltungsanordnung zur Durchführung des Verfahrens.

Bekannte Aufnahme-/Wiedergabegeräte, insbesondere Diktiergeräte, enthalten meist eine Vorrichtung, um bestimmte Teile einer Aufnahme hervorzuheben bzw. zu markieren. Eine derartige Markierung erfolgt in der Regel durch die Aufzeichnung eines akustischen Signals zu Beginn und am Ende des zu markierenden Teils der Aufzeichnung und wird durch die Betätigung einer speziellen Taste vom Benutzer gesetzt.

Diese Verfahrensweise hat, insbesondere bei einem langen zu markierenden Aufzeichnungsteil, den Nachteil, daß der Benutzer am Ende des zu markierenden Teils vergessen kann eine Markierung zu setzen. Weiterhin kann - bei einer Niederschrift der Aufzeichnung - die Schreibkraft Zweifel haben, ob die Markierung korrekt aufgezeichnet wurde. Dies würde zu unnötigen Rückfragen und Verzögerungen führen. Ein weiterer Nachteil besteht darin, daß der Benutzer nach einem Umspulvorgang nicht mehr weiß, ob er einen markierten oder einen nicht markierten Teil der Aufzeichnung abhört.

Aus der DE-AS-11 18 490 ist eine elektroakustische Bandmarkierung bekannt, bei welcher in der Tonaufzeichnungsspur unter Abschwächung der ursprünglichen Aufnahme nachträglich eine Aufzeichnung überlagert wird. Bei der nachträglichen Aufzeichnung wird ein Signal aufgezeichnet, das einer bereits vorhandenen Signalquelle entnommen wird und das zur elektroakustischen Markierung dient.

Diese elektroakustische Bandmarkierung weist den Nachteil auf, daß die Überlagerung der ursprünglichen Aufnahme durch die nachträgliche Aufzeichnung erst auf dem Aufzeichnungsmedium (dem Magnetband) erfolgt. Dadurch sind zwei Aufzeichnungsvorgänge für die Aufzeichnung von Tonsignal und Markierung auf dem Aufzeichnungsmedium erforderlich.

Aus der DE-OS 22 30 798 ist eine Einrichtung für ein Diktiergerät bekannt, welche eine Kennzeichnung von nicht zum Diktat gehörender Index-Information ermöglicht. Dabei wird einem Sprachsignal vom Beginn bis zum Ende des zu markierenden Aufzeichnungsteils ein Markierungssignal additiv überlagert und anschließend das so modifizierte Sprachsignal aufgezeichnet.

Ein Nachteil einer derartigen Kennzeichnung besteht darin, daß die Amplitude des Markierungssignals konstant ist und nicht abhängig von der Amplitude des Sprachsignals geregelt wird. Somit können leise Sprachsignale durch ein zu lautes Markierungssignal unverständlich werden, bzw. ein leises Markierungssignal ist durch ein lautes Aufzeichnungssignal (Sprachsignal zuzüglich der Umgebungsgeräusche) nicht mehr wahrnehmbar.

Aufgabe der Erfindung ist es daher, bei einem Aufnahme-/Wiedergabegerät die Markierung derart durchzuführen, daß Fehler bei der Bedienung weitgehend ausgeschlossen werden und daß der hierfür erforderliche Aufwand minimal ist.

Diese Aufgabe wird erfindungsgemäß durch ein Verfahren mit den Merkmalen des Patentanspruchs 1 und durch eine Schaltungsanordnung mit den Merkmalen des Patentanspruchs 7 gelöst.

Das erfindungsgemäße Verfahren weist den Vorteil auf, daß nicht nur Beginn und Ende sondern auch der dazwischen liegende Aufzeichnungsteil markiert wird. Weiterhin ist sichergestellt, daß das Nutzsignal nicht durch das Markierungssignal gelöscht wird. Ein weiterer Vorteil ist, daß der Benutzer die Markierung nicht vergessen kann, da er ununterbrochen den Taster betätigen muß, um einen Aufnahmeteil zu markieren.

Das Verfahren nach Patentanspruch 2 weist den Vorteil auf, daß zur Erzeugung des Markierungssignals keine zusätzliche Signalquelle benötigt wird.

Das Verfahren nach Patentanspruch 3 weist den Vorteil auf, daß auch ein schwaches Nutzsignal nicht vom Markierungssignal gelöscht wird.

Das Verfahren nach Patentanspruch 4 weist den Vorteil auf, daß ein in der Amplitude stark unterschiedliches Markierungssignal vermieden wird. Weiterhin entfällt ein sonst erforderlicher gesteuerter Verstärker für das Markierungssignal, sowie dessen Steuerung durch eine Steuereinheit.

Das Verfahren nach Patentanspruch 5 weist den Vorteil auf, daß aufgrund der Begrenzung des Markierungs- und Sprachsignals oder des Summensignals sichergestellt ist, daß das magnetische Aufzeichnungsmedium nicht übersteuert wird.

Das Verfahren nach Patentanspruch 6 weist den Vorteil auf, daß kein zusätzliches Markierungssignal benötigt wird.

Die Schaltungsanordnung nach Patentanspruch 7 zur Durchführung des Verfahrens nach Patentanspruch 1 weist den Vorteil auf, daß eine bereits im Gerät vorhandene Steuereinheit mitbenutzt werden kann. Weiterhin ist vorteilhaft, daß nur ein Schreibvorgang zur Aufzeichnung des Summensignals benötigt wird. Außerdem kann dadurch, daß der Taster die Betriebsspannung für den Verstärker des Markierungssignals an- bzw. abschaltet, Energie gespart werden.

Die Schaltungsanordnung nach Patentanspruch 8 weist den Vorteil auf, daß nur ein Filter niedriger Ordnung benötigt wird, um eine frequenzselektive Dämpfung zu erreichen. Falls ein Filter vorhanden ist, genügt es dessen Dämpfungscharakteristik in Abhängigkeit von der Frequenz zu ändern.

Die Erfindung wird im folgenden anhand in der Zeichnung dargestellter Ausführungsformen näher beschrieben und erläutert. Es zeigt:
- Fig. 1: ein Blockschaltbild der Markierungseinrichtung in einer ersten Ausführungsform,
- Fig. 2: ein Blockschaltbild der Markierungseinrichtung in einer zweiten Ausführungsform und
- Fig. 3: im Blockschaltbild der Markierungseinrichtung in einer dritten Ausführungsform.

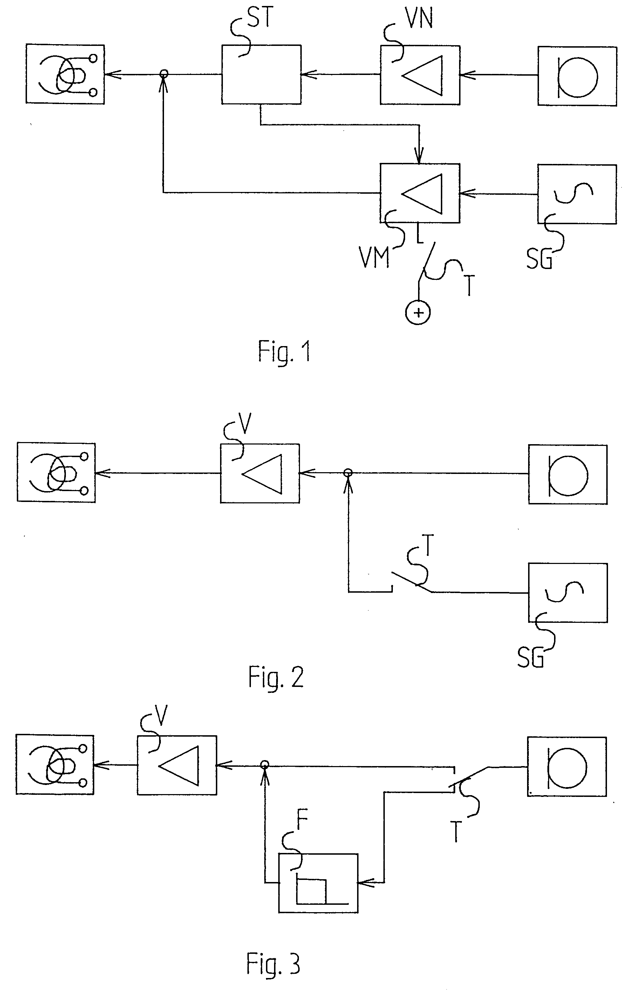

Fig. 1 zeigt den Aufbau der Markierungseinrichtung. Diese weist ein Mikrofon zur Eingabe des Nutzsignals (Sprachsignal), einen
Verstärker VN zur Verstärkung des Nutzsignals, einen Signalgenerator SG zur Erzeugung des Markierungssignals, einen Verstärker VM zur Verstärkung des Markierungssignals und einen Taster T zur Überlagerung des Markierungssignals, eine Steuereinheit ST und den Schreibkopf zum Aufzeichnen auf.

Soll das Nutzsignal nicht markiert werden, wird zunächst das vom Mikrofon ausgegebene Nutzsignal vom Verstärker VN verstärkt. Die Steuereinheit ST beeinflußt das Nutzsignal nicht. Da der Taster T in diesem Fall offen ist, erhält der Verstärker VM keine Betriebsspannung, so daß der Verstärker VM kein Ausgangssignal liefert. Deshalb enthält der Schreibstrom für den Aufzeichnungskopf nur das verstärkte Nutzsignal. Die Verstärkung des Verstärkers VN ist hierbei so gewählt, daß das magnetische Aufzeichnungsmedium vom verstärkten Nutzsignal nicht übersteuert wird.

Wird hingegen der Taster T zur Markierung des Nutzsignals betätigt, so wird der Verstärker VM an die Betriebsspannung angeschlossen. Das Signal, das die Steuereinheit ST dem Verstärker VM zuleitet enthält eine Information über die Amplitude des Nutzsignals und dient im Verstärker VM zum Einstellen der Verstärkung. Diese wird so eingestellt, daß das Summensignal aus Markierungs- und Nutzsignal keine Übersteuerung des magnetischen Aufzeichnungsmediums bewirkt. Weiterhin weist das Markierungssignal immer eine kleinere Amplitude auf als das Nutzsignal.

Beim erfindungsgemäßen Verfahren ist eine einwandfreie Verständlichkeit des Nutzsignals bei überlagertem Markierungssignal sichergestellt. Der Verstärker VN für das Nutzsignal ist hierbei so eingestellt, daß das verstärkte Nutzsignal immer so klein ist, daß ein Markierungssignal überlagert werden kann, ohne die Aussteuerungsgrenze des Aufzeichnungsmediums zu überschreiten.

Alternativ hierzu kann auch die Amplitude des Signals, das zwischen Mikrofon und Verstärker VN vorliegt, der Steuereinheit ST zugeleitet werden. Die Steuereinheit ST leitet daraus ein Kriterium zur Einstellung der Verstärkung des Verstärkers VM ab. Weiterhin besteht die Möglichkeit auch die Verstärkung des Verstärkers VN durch die Steuereinheit ST zu steuern. So kann erreicht werden, daß das Summensignal aus Nutz- und Markierungssignal das magnetische Aufzeichnungsmedium immer optimal aussteuert.

Fig. 2 zeigt den Aufbau der Markierungseinrichtung in einer zweiten Ausführungsform. Um den Schaltungsaufwand zu reduzieren, wird bei dieser Ausführungsform das Markierungssignal dem Nutzsignal vor dem Verstärker V überlagert, wenn der Taster T geschlossen wird. Hierbei wird die Markierungssignalamplitude bei der Fertigung so eingestellt, daß diese unterhalb einer gemittelten Nutzsignalamplitude liegt, um die Verständlichkeit des Nutzsignals nicht wesentlich zu beeinträchtigen. Das somit erzeugte Summensignal wird vom Verstärker V verstärkt und dem Schreibkopf zugeleitet. Die Verstärkung des Verstärkers V ist so eingestellt, daß auch bei großen Nutzsignalamplituden und überlagertem Markierungssignal keine Übersteuerung des Aufzeichnungsmediums erfolgt, welche die Verständlichkeit beeinträchtigt.

Fig. 3 zeigt den Aufbau der Markierungseinrichtung in einer dritten Ausführungsform. In dieser Ausführungsform wird kein zusätzliches Markierungssignal benötigt, da das vom Mikrofon aufgenommene Sprachsignal selbst verändert wird. Der Benutzer kann über Schaltmittel T wählen, ob das Sprachsignal selbst oder ein gefiltertes Sprachsignal aufgezeichnet werden soll. Zur Filterung - und damit Markierung - des Sprachsignals wird dabei ein Filter F niedriger Ordnung benutzt, der bestimmte spektrale Anteile des Sprachsignals dämpft. Dadurch kann erreicht werden, daß das aufgenommene Sprachsignal beispielsweise eine geringe Anzahl hoher oder tiefer Frequenzen enthält, oder daß das Sprachsignal in einem bestimmten Frequenzbereich nur kleine Amplituden aufweist.

Alternativ zu einer Dämpfung ist auch eine Verstärkung spektraler Anteile des Sprachsignal möglich, die durch eine additive Überlagerung des Sprachsignals mit spektralen Anteilen des Sprachsignals erreicht werden kann. Eine weitere Möglichkeit besteht darin, ein verzögertes und ein nicht verzögertes Sprachsignal zu überlagern, wodurch eine Art Echo bzw. ein Nachhalleffekt entsteht. Bei all diesen Modifikationsmöglichkeiten erkennt der Benutzer beim Abhören der Aufnahme sofort, daß die Stimme deutlich verändert klingt und interpretiert dies spontan als
Markierung. Hierbei wird über einen Verstärker V der Schreibstrom so gesteuert, daß bei der Aufzeichnung keine Übersteuerung auftritt.

Bei einer digitalen Verarbeitung des Sprachsignals ist diese Art der Markierung besonders vorteilhaft. Da die Frequenz des Sprachsignals ohnehin vor der Abtastung durch ein Antialiasingfilter begrenzt werden muß, kann durch einen Schalter die maximal erlaubte Frequenz des Sprachsignals umgeschaltet werden. Soll ein Aufzeichnungsteil nicht markiert werden, ist die maximal zulässige Frequenz des Sprachsignals so zu wählen, daß die aufgezeichnete Stimme nicht verändert klingt; soll ein Aufzeichnungsteil markiert werden, wird die maximal zulässige Frequenz des Sprachsignals verringert, so daß die aufgezeichnete Stimme deutlich tiefer klingt. Hierbei wird die Dämpfung der hochfrequenten Komponenten des Sprachsignals ebenfalls durch das bereits vorhandene Antialiasingfilter durchgeführt. Bei einer derartigen Vorgehensweise besteht auch die Möglichkeit die Abtastrate für das Sprachsignal zu verringern, so daß bei der digitalen Speicherung eines markierten Sprachsignals weniger Speicherplatz benötigt wird als bei einem nicht markiertem Sprachsignal, das mit einer höheren Abtastrate quantisiert wird.

## Patentansprüche

1. Verfahren zur Markierung von Sprachaufzeichnungen bei dem die Markierung durch Betätigen von Schaltmitteln vom Benutzer gesteuert wird, wobei das Sprachsignal vom Beginn bis zum Ende eines zu markierenden Aufzeichnungsteils verändert wird und das so modifizierte Sprachsignal aufgezeichnet wird,
**dadurch gekennzeichnet**, daß zur Veränderung des Sprachsignals dessen spektrale Anteile gedämpft, verstärkt oder verzögert werden oder daß die Amplitude des Markierungssignals, welches dem Sprachsignal auf an sich bekannte Art und Weise additiv überlagert wird, in Abhängigkeit von der Amplitude des Sprachsignals gesteuert wird.

2. Verfahren nach Anspruch 1,
**dadurch gekennzeichnet**, daß ein bereits vorhandenes tonfrequentes Signal als Markierungssignal benutzt wird.

3. Verfahren nach Anspruch 1 oder 2,
**dadurch gekennzeichnet**, daß die Amplitude des Markierungssignals unterhalb der gemittelten Amplitude des Sprachsignals liegt, und daß in den Pausen des Sprachsignals das Markierungssignal eine voreingestellte Amplitude aufweist.

4. Verfahren nach einem oder mehreren der Ansprüche 1 oder 3,
**dadurch gekennzeichnet**, daß die Amplituden des Sprachsignals und des Markierungssignals durch den Verstärker (VN) für das Sprachsignal und den Verstärker (VM) für das Markierungssignal oder den Verstärker (V) für das Summensignal derart begrenzt werden, daß es durch die Amplitude des Summensignalszu keiner Übersteuerung kommt.

5. Verfahren nach Anspruch 1,
**dadurch gekennzeichnet**, daß ein bestimmter Frequenzbereich des Sprachsignals durch ein Filter (F) gedämpft wird oder daß ein bestimmter Frequenzbereich des Sprachsignals durch ein Verzögerungsglied verzögert dem Sprachsignal überlagert wird, wodurch die aufgezeichnete Sprache eindeutig beim Abhören als verfremdet erkannt wird.

6. Schaltungsanordnung zur Durchführung des Verfahrens nach Anspruch 1 bis 5,
**dadurch gekennzeichnet**, daß die Steuereinheit (ST), eine fortlaufende Mittelwertbildung der Amplitude des Sprachsignals vornimmt und anhand des Mittelwerts den Verstärker für das Markierungssignal steuert, daß der Verstärker (VM) für das Markierungssignal durch Schaltmittel (T) mit der Versorgungsspannung verbunden wird und daß das Summensignal, bestehend aus Sprach- und Markierungssignal, dem Schreibkopf zugeführt wird.

7. Schaltungsanordnung nach Anspruch 6,
**dadurch gekennzeichnet**, daß durch Schaltmittel (T) ein Filter (F) niedriger Ordnung in den Signalweg des Sprachsignals geschaltet wird oder dessen Dämpfung verändert wird.

8. Schaltungsanordnung nach Anspruch 7,
**dadurch gekennzeichnet**, daß durch Schaltmittel (T) ein Filter (F) niedriger Ordnung in den Signalweg des Sprachsignals geschaltet wird oder dessen Dämpfung verändert wird.
